# FASCICULE DE BREVET EUROPEEN

(11) **EP 1 188 974 B1**
(45) Date de publication et mention de la délivrance du brevet: **26.07.2006**
(21) Numéro de dépôt: 01402380.8
(22) Date de dépôt: 17.09.2001
(51) Int. Cl.: F16K 21/16, F16K 47/12

(54) **Dispositif doseur autonettoyant**
Selbstreinigende Dosiervorrichtung
Self-cleaning dosing device

(30) Priorité: 18.09.2000 FR 0011858
(43) Date de publication de la demande: 20.03.2002
(73) Titulaire: HISPANO SUIZA, 92707 Colombes Cedex (FR)
(72) Inventeur: Michau, Marion, 94300 Vincennes (FR); Rodrigues, José, 77176 Nandy (FR); Tiepel, Alain, 77930 Chailly-en-Biere (FR)
(74) Mandataire: David, Alain

(56) Documents cités:
- BE-A- 378 084
- DD-A- 255 577
- US-A- 4 176 683
- US-A- 4 350 009

## Description

### Domaine de l'invention

La présente invention se rapporte au domaine général des dispositifs de réglage de débit de fluide et elle concerne plus particulièrement un dispositif doseur autonettoyant.

### Art antérieur

Il est connu que dans les clapets utilisés en régulation, les longueurs fonctionnelles de guidage sont génératrices de frottements qui provoquent alors un phénomène d'hystérésis. Ces frottements sont d'autant plus importants que la pollution qui existe dans tout fluide entraîne une création de « gommes » sur les surfaces de guidage en contact.

Dans le cas particulier des dispositifs doseurs des systèmes d'injection de carburant, dans les turboréacteurs ou les turbopropulseurs (appelé plus généralement turbomachines), cet hystérésis entraîne une hétérogénéité du débit d'injection susceptible de nuire au bon fonctionnement de la turbomachine notamment au moment de son allumage.

Une solution à ce problème consiste classiquement à diminuer les surfaces de frottement. Toutefois, cette solution présente l'inconvénient majeur d'augmenter l'usure de contact des surfaces fonctionnelles restantes et donc de limiter la durée de vie du dispositif doseur. Une autre solution consiste à diminuer le coefficient de frottement des surfaces en contact comme le montre la demande DD255577A. Toutefois, ici encore, cette solution s'avère insuffisante lorsque l'accumulation de gommes ou/et de polluants devient trop importante.

### Objet et définition de l'invention

La présente invention a donc pour objet de pallier ces inconvénients en proposant un dispositif doseur de fluide qui permet de diminuer notablement voire d'éliminer toute accumulation de pollutions due au déplacement du fluide au travers du dispositif.

Ces buts sont atteints par un dispositif doseur de fluide selon la revendication 1.

Avec cette structure particulière, on oblige le fluide à balayer toutes les surfaces en contact. On assure ainsi un auto-nettoyage du dispositif qui empêche l'accumulation des polluants, et la création de « gommes », en les évacuant avec le fluide dosé.

Avantageusement, les moyens de canalisation du fluide comportent une gorge hélicoïdale de largeur L et de pas P.

Selon le mode de réalisation envisagé, les moyens de canalisation du fluide peuvent être disposés sur ladite soupape de dosage ou sur ledit fourreau.

De préférence, la course C de la soupape de dosage est supérieure ou égale à la distance P-L.

### Brève description des dessins

Les caractéristiques et avantages de la présente invention ressortiront mieux de la description suivante, faite à titre indicatif et non limitatif, en regard des dessins annexés sur lesquels
- la figure 1 est une vue en perspective illustrant un dispositif doseur selon l'invention, et
- les figures 2 et 3 sont deux vues en coupe du dispositif doseur de la figure 1 dans deux positions caractéristiques de son mode de fonctionnement.

### Description détaillée d'un mode de réalisation préférentiel

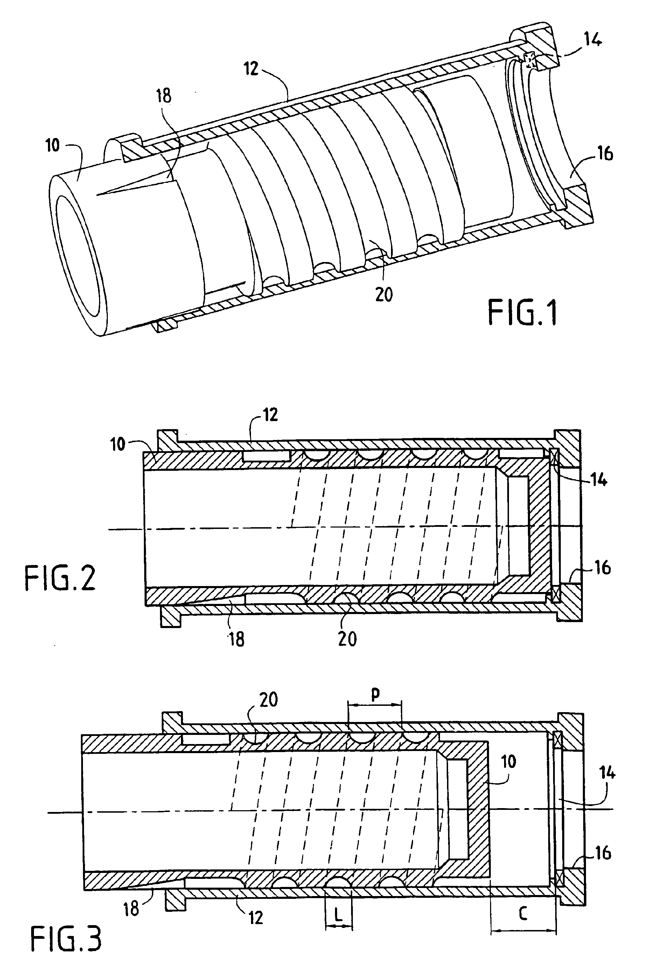

La figure 1 illustre en perspective un dispositif doseur conforme à l'invention est destiné à l'alimentation de moyens d'utilisation (non représentés) par un fluide sous pression fourni par une source d'alimentation (non représentée). Un exemple d'application d'un tel dispositif doseur est donné avec un système d'injection de carburant dans une chambre de combustion d'une turbomachine.

Sous l'action du fluide soumis à une pression d'alimentation déterminée, une soupape de dosage 10 peut coulisser dans un fourreau cylindrique 12 entre une position initiale de fermeture dans laquelle la soupape ne laisse pas passer le fluide et vient en contact contre un joint d'étanchéité 14 disposé au niveau d'un orifice d'admission du fluide 16 (voir la figure 2), et une position d'ouverture terminale dans laquelle le fluide peut traverser le dispositif doseur et s'écoule vers les moyens d'utilisation de ce fluide au travers d'un orifice d'éjection 18 en forme de fentes pratiquées dans la soupape de dosage et dont les sections de passage sont calculées pour assurer le débit dosé souhaité au niveau de ces moyens d'utilisation (voir la figure 3).

Selon l'invention, la soupape de dosage comporte des moyens 20 de canalisation du fluide destiné à permettre, pendant le déplacement de la soupape de dosage dans son fourreau sur toute sa course C, un balayage de ce fluide sur l'ensemble des surfaces en contact entre la soupape et le fourreau. Ces moyens de canalisation sont , de façon préférentielle, constitués par une gorge hélicoïdale de largeur L dont le pas P est déterminé de manière à ce que, lors de chaque cycle d'ouverture/fermeture de la soupape, le fluide balaye toutes les surfaces en contact et ainsi évacue les polluants qui auraient pu s'y accumuler.

Ainsi, si l'on considère la course C de la soupape et le pas P de la gorge dont la largeur L est, dans l'exemple illustré, égale à P/2, cette condition sera réalisée si C est supérieure ou égale à P/2. Plus généralement (pour les cas où le rapport entre le pas de la gorge et sa largeur n'est pas égale à ½), cette condition sera vérifiée si la course C de la soupape est supérieure ou égale à la distance P-L (différence entre le pas P et la largeur L).

Bien entendu, la gorge sera dimensionnée en profondeur pour répondre au débit de fluide désiré et éviter des pertes de charge trop importantes dans les moyens d'utilisation.

On notera que si, dans l'exemple illustré, la gorge 20 est pratiquée dans la soupape 10, il est bien évident qu'il est tout aussi envisageable de la réaliser dans le fourreau 12. Dans l'une ou l'autre de ces deux configurations alternatives, la gorge en assurant également un raclage des surfaces en contact permet de décoller les polluants accumulés sur celles-ci. En outre, le balayage opéré par le fluide au niveau de ces moyens de canalisation que constitue la gorge hélicoïdale 20 permet une évacuation de ces polluants vers les moyens d'utilisation du fluide et réalise ainsi un auto-nettoyage de la soupape de dosage.

## Revendications

1. Dispositif doseur de fluide pour doser un fluide depuis une source d'alimentation vers des moyens d'utilisation de ce fluide comprenant une soupape de dosage (10) pouvant coulisser dans un fourreau (12) sur une course C de section constante, ledit fourreau comportant à une extrémité un orifice d'admission du fluide (16) depuis ladite source d'alimentation et à une extrémité opposée un orifice d'éjection (18) de ce fluide vers lesdits moyens d'utilisation, **caractérisé en ce qu'**il comporte des moyens (20) de canalisation du fluide permettant pendant le déplacement de la soupape de dosage dans son fourreau, un balayage du fluide sur ladite course C de l'ensemble des surfaces en contact de ladite soupape et dudit fourreau, ledit orifice d'éjection ayant même section que ledit fourreau.

2. Dispositif doseur de fluide selon la revendication 1, **caractérisé en ce que** lesdits moyens de canalisation du fluide comportent une gorge hélicoïdale de largeur L et de pas P.

3. Dispositif doseur de fluide selon la revendication 1 ou la revendication 2, **caractérisé en ce que** les moyens de canalisation du fluide sont disposés sur ladite soupape de dosage.

4. Dispositif doseur de fluide selon la revendication 1 ou la revendication 2, **caractérisé en ce que** les moyens de canalisation du fluide sont disposés sur ledit fourreau.

5. Dispositif doseur de fluide selon la revendication 2, **caractérisé en ce que** la course C de la soupape de dosage est supérieure ou égale à la distance P-L.

6. Injecteur de carburant d'une chambre de combustion de turbomachine comportant un dispositif doseur de carburant selon l'une quelconque des revendications 1 à 5.

## Claims

1. Fluid metering device for metering a fluid from a supply source to means of use of this fluid comprising a metering valve (10) able to slide in a sleeve (12) over a travel C of constant cross-section, said sleeve comprising at one end an orifice (16) for admitting the fluid from said supply source and at an opposite end, an orifice (18) for ejecting this fluid to said means of use, the device being **characterised in that** it comprises means (20) of channelling the fluid intended to allow, during the movement of the metering valve in its sleeve, a sweeping of the fluid over said travel C of all the contacting surfaces of said valve and of said sleeve, said ejection orifice having the same cross-section as said sleeve.

2. Fluid metering device according to Claim 1, **characterised in that** said means of channelling the fluid comprise a helical groove of width L and of pitch P.

3. Fluid metering device according to Claim 1 or Claim 2, **characterised in that** the means of channelling the fluid are disposed on said metering valve.

4. Fluid metering device according to Claim 1 or Claim 2, **characterised in that** the means of channelling the fluid are disposed on said sleeve.

5. Fluid metering device according to Claim 2, **characterised in that** the travel C of the metering valve is greater than or equal to the distance P-L.

6. Fuel injector for a turbomachine combustion chamber comprising a fuel metering device according to any one of Claims 1 to 5.

## Patentansprüche

1. Fluiddosiervorrichtung zur Dosierung eines Fluids von einer Versorgungsquelle zu Benutzungsmitteln dieses Fluids, umfassend ein Dosierventil (10), das geeignet ist, in einer Buchse (12) über einen Lauf C konstanten Querschnitts zu gleiten, wobei die Buchse an einem Ende eine Einlassöffnung des Fluids (16) von der Versorgungsquelle und an einem gegenüberliegenden Ende eine Ausstoßöffnung (18) dieses Fluids zu den Benutzungsmitteln umfaßt, **dadurch gekennzeichnet, daß** sie Mittel (20) zur Kanalisierung des Fluids umfaßt, die während der Bewegung des Dosierventils in seiner Buchse über den Lauf C eine Fluidüberspülung der Gesamtheit der Flächen in Kontakt mit dem Ventil und der Buchse ermöglichen, wobei die Ausstoßsöffnung denselben Querschnitt wie die Buchse aufweist.

2. Fluiddosiervorrichtung nach Anspruch 1, **dadurch gekennzeichnet, daß** die Mittel zur Kanalisierung des Fluids eine schraubenförmige Auskehlung der Breite L und der Steigung P aufweisen.

3. Fluiddosiervorrichtung nach einem der Ansprüche 1 oder 2, **dadurch gekennzeichnet, daß** die Mittel zur Kanalisierung des Fluids an dem Dosierventil angeordnet sind.

4. Fluiddosiervorrichtung nach einem der Ansprüche 1 oder 2, **dadurch gekennzeichnet, daß** die Mittel zur Kanalisierung des Fluids an der Buchse angeordnet sind.

5. Fluiddosiervorrichtung nach Anspruch 2, **dadurch gekennzeichnet, daß** der Lauf C des Dosierventils größer als oder gleich dem Abstand P-L ist.

6. Treibstoffeinspritzdüse einer Brennkammer einer Turbomaschine umfassend eine Dosiervorrichtung von Brennstoff nach der Ansprüche 1 bis 5.
